# EUROPÄISCHE PATENTSCHRIFT

(11) **EP 0 982 160 B1**
(45) Veröffentlichungstag und Bekanntmachung des Hinweises auf die Patenterteilung: **30.10.2002**
(21) Anmeldenummer: 98115759.7
(22) Anmeldetag: 21.08.1998
(51) Int. Cl.: B60D 1/14, B62D 25/20, B60P 1/44

(54) **Fahrzeugchassis mit Aufprallschutz für Fahrzeuge**
Vehicle chassis with crash protection
Châssis d'un véhicule avec protection contre les chocs

(43) Veröffentlichungstag der Anmeldung: 01.03.2000
(73) Patentinhaber: Sörensen Hydraulik, Zweigniederlassung, Ulfborg, Filial af Sörensen Hydraulik GmbH, Tyskland, 6990 Ulfborg (DK)
(72) Erfinder: Jensen, Jens Herman, DK-6990 Ulfborg (DK)
(74) Vertreter: Niedmers, Ole, Dipl.-Phys.

(56) Entgegenhaltungen:
- EP-A- 0 808 747
- FR-A- 2 659 278
- US-A- 3 638 811
- US-A- 3 666 121
- US-A- 4 204 702
- 'Parts & Illustration Catalog', Januar 1990, GENERAL MOTORS CORPORATION

## Beschreibung

Die Erfindung betrifft ein Lastkraftwagenchassis, umfassend einen Tragrahmen zur Aufnahme wenigstens eines Teils des Fahrwerks, insbesondere auch wenigstens eines Teils des Fahrzeugaufbaus, wobei das fahrzeugseitig hintere Ende des Tragrahmens mit einem einen Aufprallschutz für Fahrzeuge bildenden stabförmigen Element versehen ist.

Ein Lastkraftwagenchassis dieser Art ist bekannt (EP-A-0 808 747). Bei Fahrzeugen, insbesondere Lastkraftfahr zeugen, ist es von einer bestimmten Größe an durch gesetzliche Vorschriften in vielen Ländern geregelt, daß diese zwingend einen sogenannten Aufprallschutz am hinteren Ende des Fahrzeugs aufweisen müssen. Dieser Aufprallschutz ist deshalb vielfach nötig, weil der Abstand zwischen einem Straßenuntergrund, auf dem das Fahrzeug steht, und der Ladefläche des Fahrzeugs regelmäßig mit der Größe der Fahrzeuge zunimmt. Dieser Aufprallschutz für Fahrzeuge dient, wie der Name schon andeutet, der Verhinderung des unter den Bereich unter der Ladefläche des Fahrzeugs Fahrens durch kleinere Fahrzeuge wie Personenkraftwagen, aber auch Motorräder und dergleichen.

Dieser Aufprallschutz besteht regelmäßig aus einem staboder stangenförmigen Element, das, im wesentlichen parallel zur Ladefläche bzw. parallel zum Straßenuntergrund, auf dem das Fahrzeug steht oder sich bewegt, ausgebildet ist und regelmäßig wenigstens so breit wie zwei voneinander beabstandete Träger, die im wesentlichen einen Tragrahmen bilden, eines Fahrzeugschassis ist oder beidseitig darüber hinaus sogar noch überstehend, so daß dieser Aufprallschutz im wesentlichen, von hinten auf das Fahrzeug betrachtet, die gesamte Breite des Fahrzeugs vollständig überspannt.

Diese Art des Aufprallschutzes, die, wie oben erwähnt, vielfach zwingend für Lastkraftfahrzeuge ab einer bestimmten Größe erforderlich ist, kann beispielsweise das Vorsehen von Einrichtungen am hinteren Ende des Fahrzeugs be- bzw. verhindern, die zum Betrieb derartig ausgebildeter Fahrzeuge zwar gewünscht werden, die aber aufgrund der zwingenden Vorschrift des Vorsehens eines derartigen Aufprallschutzes nicht realisiert werden können. Dazu sei bemerkt, daß der Aufprallschutz, wenn er denn vorgesehen ist bzw. sein muß, bezüglich seiner Funktion uneingeschränkt Priorität gegenüber anderen wünschenswerten Einrichtungen hat, da er ein vielfach nicht abdingbares Sicherheitselement darstellt.

So besteht beispielsweise das Bedürfnis, am Fahrzeugchassis eine Kupplungseinrichtung vorzusehen, um ein derart ausgerüstetes Fahrzeug bzw. Lastkraftfahrzeug zu befähigen, einen Anhänger zu ziehen. Anhängerkupplungen, die für den Betrieb mit normalen Anhängern ausgelegt sind, die größenmäßig an das zu ziehende Fahrzeug angepaßt sind, können regelmäßig in unmittelbarer Verlängerung der Träger des Tragrahmens vorgesehen werden, da sie im Bereich zwischen dem stab- bzw. stangenförmigen Aufprallschutz und der Unterseite der Ladeplattform angeordnet sind bzw. diesen Raum belegen können.

Es besteht aber vielfach auch das Bedürfnis, mit derartigen Fahrzeugen bzw. Lastkraftfahrzeugen auch kleinere Anhänger bzw. Einheiten zu ziehen, so daß die bisher dafür vorgeschlagenen Lösungen aufgrund des Vorhandenseins des Aufprallschutzes nicht in Frage kommen bzw. nicht realisiert werden können.

Es ist somit Aufgabe der vorliegenden Erfindung, ein Fahrzeugchassis der eingangs genannten Art zu schaffen bzw. derart auszubilden, daß auch kleinere Einheiten bzw. kleinere Anhänger mit dem Fahrzeugchassis über eine Kupplungseinrichtung verbindbar sind, ohne daß der Aufprallschutz seine Wirkung verliert und ohne daß am Aufprallschutz regelmäßig auch verbotene Eingriffe durchgeführt werden müssen, wobei das Fahrzeugchassis selbst nicht geändert zu werden braucht und auch an diesem keine Eingriffe vorgenommen werden müssen, die aufgrund gesetzlicher Bestimmungen in vielen Ländern nicht erlaubt sind, wobei es auch möglich sein soll, schon im Einsatz befindliche Fahrzeuge auf einfache und kostengünstige Weise erfindungsgemäß nachzurüsten.

Gelöst wird die Aufgabe gemäß der Erfindung dadurch, daß eine Kugelkupplungseinrichtung zum lösbaren Ankuppeln von Kleinanhängern vorgesehen ist, wobei die Kugelkupplungseinrichtung mit dem Tragrahmen verbunden ist und wobei ein Kupplungselement an einem freien Ende eines das Aufprallschutzelement im Querschnitt teilweise umschließenden Befestigungselements angeordnet ist, dessen festes anderes Ende mit dem Tragrahmen des Fahrzeugs verbunden ist.

Der Vorteil der erfindungsgemäßen Lösung besteht im wesentlichen darin, daß eine Kugelkupplungseinrichtung, die naturgemäß relativ zum Untergrund, auf dem das Fahrzeug steht bzw. fährt, einen geringeren Abstand haben muß als normale Standardkupplungen, die dem ziehenden Fahrzeug angepaßte Anhänger ziehen können, erfindungsgemäß ebenfalls vorgesehen werden können, ohne daß der Aufprallschutz für Fahrzeuge in irgendeiner Weise beeinträchtigt wird bzw. keine Maßnahmen durchgeführt werden müssen, die in irgendeiner Weise an dem Aufprallschutz vorgenommen werden müssen. Die erfindungsgemäße Lösung gestattet auch das nachträgliche Befestigen an schon sich im Einsatz befindlichen Fahrzeugen, ohne daß Manipulationen am Fahrzeugchassis vorgenommen werden müssen. Die erfindungsgemäße Lösung ist quasi als standardisierter, vorkonfektionierter Bausatz bereitstellbar und kann am Tragrahmen bzw. den Trägern des Fahrzeugchassis leicht befestigt werden.

Dadurch, daß das eigentliche Kugelkupplungselement der Kugelkupplungseinrichtung vorzugsweise an einem freien Ende des das stabförmige Element (Aufprallschutz) im Querschnitt teilweise umschließenden Befestigungselements angeordnet ist, dessen festes anderes Ende mit dem Tragrahmen des Fahrzeugs verbunden ist, d.h. entweder über die besagten Verbindungselemente oder direkt, gestattet diese Art der Befestigung des Kugelkupplungselementes sogar eine den Aufprallschutz nicht berührende Befestigung des Kugelkupplungselementes auch in einem Abstand von dem Untergrund, auf dem das Fahrzeug steht oder fährt, der in etwa dem Abstand zwischen dem Aufprallschutz und dem Untergrund, auf dem das Fahrzeug steht oder fährt, entspricht. Den gesetzlichen Auflagen der Nichtbeeinträchtigung des Aufprallschutzes durch zusätzliche wünschenswerte Einrichtungen am hinteren Ende des Fahrzeugs wird durch diese sehr vorteilhafte Ausgestaltung der Erfindung in vollem Umfange Rechnung getragen.

Bei einer vorteilhaften Ausgestaltung des Fahrzeugchassis ist die Kugelkupplungseinrichtung an gesonderten Verbindungselementen befestigt, über die es mit dem Tragrahmen bzw. den den Tragrahmen im wesentlichen bildenden Trägern verbunden ist. Vielfach sind im hinteren Bereich der Träger, an denen auch der besagte Aufprallschutz für Fahrzeuge befestigt ist, Verbindungselemente vorhanden, an denen bzw. über die der Aufprallschutz an den Trägern des Tragrahmens befestigt ist. Grundsätzlich eignen sich diese Verbindungselemente auch zur Befestigung der Kugelkupplungseinrichtung.

Bei einer besonderen anderen vorteilhaften Ausgestaltung der Erfindung dienen die Verbindungselemente ebenfalls zur Aufnahme eines am Fahrzeug befestigbaren Ladebordwandsystems, wie es beispielsweise in der europäischen Patentanmeldung gemäß der EP-A-0 808 747 offenbart ist. Derartige Ladebordwandsysteme werden regelmäßig auch nachträglich am Tragrahmen des Fahrzeugchassis befestigt. Diese dort im Zusammenhang mit der Befestigung von Ladebordwandsystemen vorhandenen Verbindungselemente eignen sich hervorragend auch zur Befestigung des Aufprallschutzes, wobei der Aufprallschutz auch Teil des Ladebordwandsystems sein kann bzw. in bzw. mit diesem integriert sein kann. An den Verbindungselementen kann nun vorteilhafterweise entweder direkt oder über daran befestigte Ladebordwandsysteme, die einen Aufprallschutz aufweisen, ggf. auch direkt am Aufprallschutz, die Kugelkupplungseinrichtung befestigt werden, wobei es sogar denkbar ist, daß diese Verbindungselemente schon vorgewählte Löcher, Bolzen oder sonstige Befestigungseinrichtungen aufweisen, an denen die Kupplungseinrichtung gemäß der Erfindung unmittelbar befestigt werden kann oder mittelbar über das Ladebordwandsystem an diesem direkt oder ggf. an dessen Aufprallschutz.

Vorteilhaft ist es dabei auch, das Befestigungselement bei der vorgenannten Ausgestaltung derart auszubilden, daß es im Querschnitt im wesentlichen U-förmig ausgebildet ist. Diese U-förmige Ausgestaltung ist fertigungstechnisch verhältnismäßig einfach zu bewerkstelligen bzw. auszubilden und gestattet eine Umfassung des in den allermeisten Fällen mit kreisförmigem oder n-eckigem Querschnitt in Form eines Stabes oder Rohres ausgebildeten Aufprallschutzes.

Die Kugelkupplungseinrichtung weist selbst vorteilhafterweise ein Trägerelement, umfassend zwei über ein Traversenelement voneinander beabstandet verbundene Abstandselemente, auf, wobei die Kugelkupplungseinrichtung am Traversenelement befestigt ist. Auf diese Weise ist eine einfache mittige Befestigung des Kugelkupplungselements möglich, und zwar zwischen den beiden den Tragrahmen bildenden Trägern des Fahrzeugchassis.

Für Wartungs- und Austauschzwecke kann es vorteilhaft sein, das Befestigungselement am Traversenelement über ein am Traversenelement gesondert angeordnetes Anbauelement befestigbar auszubilden, wobei es ebenfalls vorteilhaft ist, das Anbauelement und das Traversenelement selbst durch Schweißung miteinander zu verbinden.

Das Befestigungselement selbst ist vorteilhafterweise mittels lösbarer Verbindungselemente mit dem Anbauelement verbindbar, beispielsweise Schrauben, Bolzen und dergleichen, so daß das Befestigungselement bzw. das Kugelkupplungselement leicht mittels allgemein zugänglicher Werkzeuge wie Schraubenschlüssel und dergleichen gelöst bzw. befestigt werden kann. Alles dieses ist ohne die geringste Beeinträchtigung des Aufprallschutzes möglich.

Auch die Abstandselemente sind vorteilhafterweise mit dem Traversenelement durch Schweißung miteinander verbindbar, so daß die gesamte Kupplungseinrichtung insgesamt einschließlich aller Teile, ggf. auch in Verbindung mit einem kompletten vorkonfektionierten Ladebordwandsystem, vorkonfektioniert werden kann und bei Bedarf an ein neu auszurüstendes Fahrzeug bzw. an ein nachzurüstendes Fahrzeug angebracht werden kann, ohne daß Beeinträchtigungen des Aufprallschutzes zu erwarten sind.

Die Erfindung wird nun unter Bezugnahme auf die nachfolgenden schematischen Zeichnungen anhand eines Ausführungsbeispiels beschrieben. Darin zeigen:

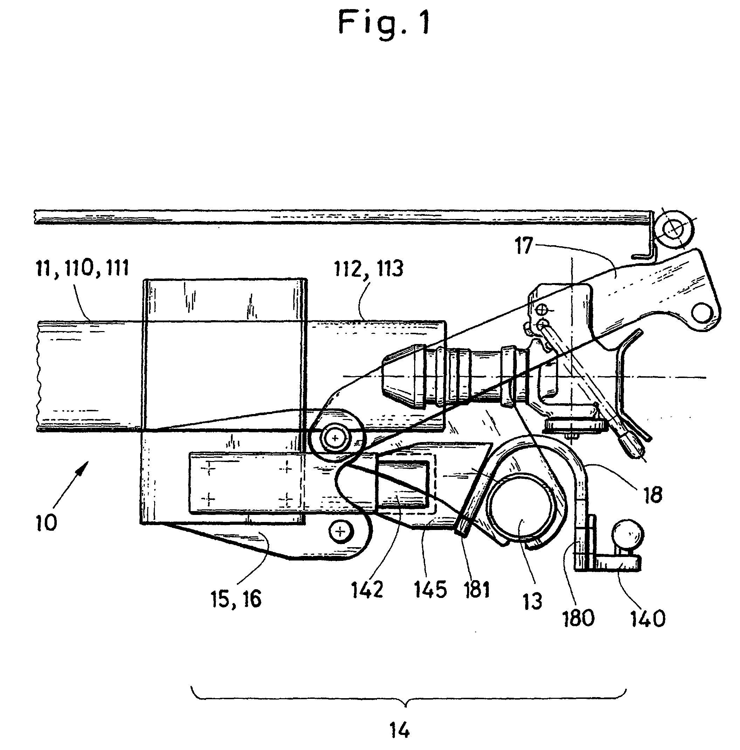

- Fig. 1: in der Seitenansicht einen Ausschnitt des hinteren Endbereiches eines Fahrzeugchassis, das einen Aufprallschutz aufweist, wobei eine Kugelkupplungseinrichtung über Verbindungselemente mit den den Tragrahmen des Fahrzeugchassis bildenden Trägern verbunden ist und wobei auch ein komplettes vorkonfektioniertes Ladebordwandsystem an den Verbindungselementen befestigt ist, und

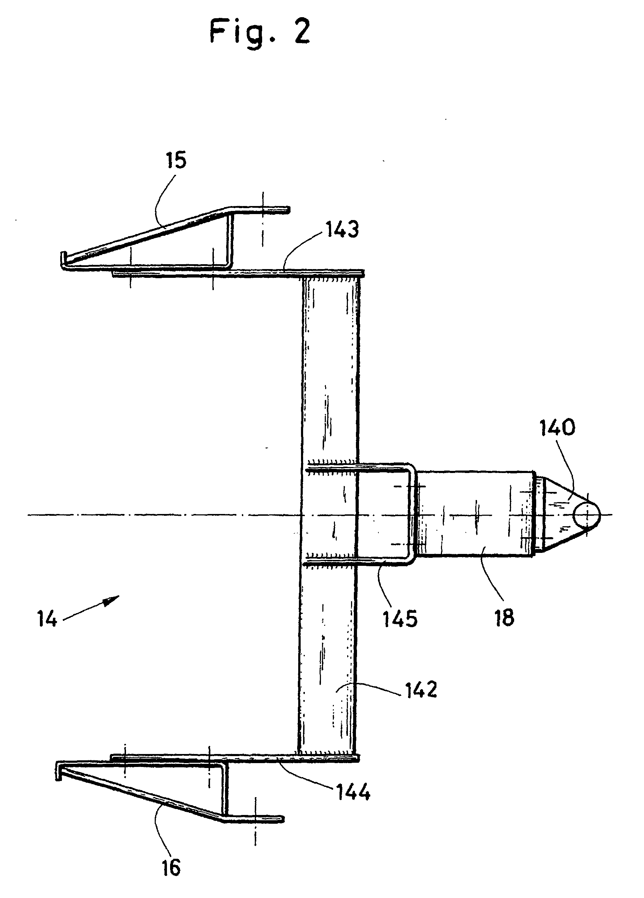

- Fig. 2: in der Draufsicht eine Kugelkupplungseinrichtung, die ein Kugelkupplungselement aufweist, das über ein Trägerelement an einem Traversenelement befestigt ist, das wiederum über parallel voneinander beabstandete Abstandselemente an Verbindungselementen befestigt werden kann, die wiederum an den Trägern eines Tragrahmens eines Fahrzeugchassis befestigt werden können.

In Fig. 1 ist der hintere Teil eines Fahrzeugs, insbesondere eines Lastkraftfahrzeugs, dargestellt, und zwar in stark schematisierter Form und unter Weglassung des Fahrwerks bzw. der Räder des Fahrzeugs und zum Verständnis der Erfindung nicht notwendiger Einzelteile bzw. Detailausgestaltungen des Fahrzeugs. Für das Verständnis der Erfindung wichtig ist das Fahrzeugchassis 10, das regelmäßig einen aus wenigstens zwei voneinander beabstandeten Trägern 110, 111 bestehenden Tragrahmen 11 umfaßt. Über dem Tragrahmen 11, d.h. in der Darstellung von Fig. 1 in einem Abstand über dem Tragrahmen 11 nach oben, ist eine Ladeplattform 12 angeordnet, auf der die mit dem Fahrzeug zu bewegenden Güter angeordnet werden können. Hier nicht gesondert dargestellt sind weitere Teile des Fahrzeugaufbaus, die für das Verständnis der Erfindung ebenfalls nicht nötig sind. Die Träger 110, 111 können sogenannte Doppelt-T-Träger sein, im Querschnitt U-profilförmig geformte Träger oder auch sonstwie profilierte geeignete Träger.

An den hinteren freien Trägerenden 112, 113 ist auf an sich bekannte Weise ein sogenannter Aufprallschutz 13 ausgebildet bzw. befestigt, der der Verhinderung des Unterfahrens kleinerer Fahrzeuge unter den Tragrahmen 11 bzw. unter die Ladeplattform 12 zwischen Tragrahmen 11 und Ladeplattform 12 dient. Bei der in den Figuren dargestellten Ausgestaltung der Erfindung ist der Aufprallschutz 13 Teil eines kompletten, ggf. vorkonfektionierten Ladebordwandsystems 17 und über dieses am Tragrahmen 11 befestigt. An den den Tragrahmen 11 bildenden beiden voneinander beabstandeten Trägern 110, 111 sind gesonderte Verbindungselemente 15, 16 befestigt, und zwar entweder direkt mit den Trägern 110, 111 oder über gesonderte Laschenelemente 19, 20, die mittels hier nicht dargestellter Schraubverbindungen oder auch mittels herstellungsseitig vorgesehener Schweißverbindungen verbunden sein können. Die Verbindungselemente 15, 16 können auch ursprünglich mit dem Fahrzeugchassis 10 verbunden gewesen sein, sie können aber auch nachträglich mit dem Fahrzeugchassis über die Trägerelemente 112, 113 oder die Laschenelemente 19, 20 verbunden worden sein, um die besagten Ladebordwandsysteme 17 am Fahrzeugchassis zu befestigen. Diese Verbindungselemente 15, 16 können also neben der Aufnahme eines Ladebordwandsystems 17 gleichzeitig auch zur erfindungsgemäßen Ausgestaltung des Fahrzeugchassis 10 vorgesehen sein.

An diesen Verbindungselementen 15, 16 ist über Abstandselemente 143, 144, die über ein Traversenelement 142, vgl. auch Fig. 2, beabstandet miteinander verbunden sind, auf nachbeschriebene Weise das Kugelkupplungselement 140 befestigt. Die Abstandselemente 143, 144 sind an den Verbindungselementen 15, 16 beispielsweise mittels Bolzen- bzw. Schraubenverbindungen miteinander verbindbar, wie es insbesondere in Fig. 2 durch die jeweiligen strichpunktierten Mittellinien von Schrauben- bzw. Bolzenverbindungen schematisch angedeutet ist. Am Traversenelement 142 ist in etwa mittig zwischen den Abstandselementen 143, 144 ein bockartig ausgebildetes Anbauelement 145 vorgesehen, auf dem das eigentliche Kugelkupplungselement 140 befestigt werden kann.

Das erwähnte eigentliche Kugelkupplungselement 140 ist über ein Befestigungselement 18 mit dem Anbauelement 145 befestigt, und zwar entweder mittels Schweißung und/oder nicht gesondert dargestellter Schraub- oder Bolzenverbindungen. Das Befestigungselement 18 weist ein freies Ende 180 auf, an dem das Kugelkupplungselement 140 befestigt ist, und ein festes anderes Ende 181, mit dem es am Anbauelement 145 befestigt ist. Das Befestigungselement 18 ist im Querschnitt im wesentlichen U-förmig ausgebildet und kann somit das stabförmige Element 13, das den Aufprallschutz bildet, berührungslos umgreifen. Das Befestigungselement 18 kann beispielsweise in Form eines plattenförmigen Körpers ausgebildet sein, der dann gebogen wird, um seine U-förmige Form im Querschnitt anzunehmen, vgl. Fig. 1. Aufgrund der auf das Befestigungselement 18 durch die auf das Kugelkupplungselement 140 einwirkenden, vertikal und horizontal gerichteten Kräfte, die von einem darauf kuppelbar befestigten Anhänger herrühren (nicht dargestellt) und eine beträchtliche Größe in allen drei möglichen Freiheitsgraden annehmen können, ist der das Befestigungselement 18 bildende Werkstoff gesondert ausgewählt und ggf. auch gesondert vergütet und kann beispielsweise aus geschmiedetem Stahl bestehen.

Insgesamt wird die Kugelkupplungseinrichtung 14, vgl. Fig. 2, entweder in Verbindung mit bzw. als Teil eines Ladebordwandsystems 17 oder von diesem gesondert, als einheitlich bereitstellbares Element herstellbar und anbietbar sein, das aus dem eigentlichen Kugelkupplungselement 140 besteht und aus dem Trägerelement 141, vgl. Fig. 2. Das Trägerelement 141 besteht wiederum aus dem besagten Traversenelement 142, den beiden Abstandselementen 143, 144 sowie dem Anbauelement 145, wobei an dem Anbauelement 145, wie schon erwähnt, das Befestigungselement befestigt ist, an dessen freiem bzw. erstem Ende 180 das Kugelkupplungselement 140 befestigt ist.

Die Begriffe Kugelkupplungselement 14 bzw. Kugelkupplungseinrichtung 140 sind so zu verstehen, daß darunter auch Kupplungselemente bzw. Kupplungseinrichtungen zu verstehen sind, die nicht zwingend eine "Kugel" zum ankuppeln eines Kleinanhängers aufweisen, sondern ein wie auch immer ausgebildetes "Element", an das der Kleinanhänger angekuppelt werden kann. Einige Staaten schreiben sogar die Form derartiger "Elemente" zwingend fest, die verschieden von einer Kugelform sind.

### Bezugszeichenliste

- 10: Fahrzeugchassis
- 11: Tragrahmen
- 110: Träger
- 111: Träger
- 112: Trägerende
- 113: Trägerende
- 12: Ladeplattform
- 13: stabförmiges Element/Aufprallschutz
- 14: Kugelkupplungseinrichtung
- 140: Kugelkupplungselement
- 141: Trägerelement
- 142: Traversenelement
- 143: Abstandselement
- 144: Abstandselement
- 145: Anbauelement
- 15: Verbindungselement
- 16: Verbindungselement
- 17: Ladebordwandsystem
- 18: Befestigungselement
- 180: erstes Ende Befestigungselement
- 181: zweites Ende Befestigungselement
- 19: Laschenelement
- 20: Laschenelement

## Patentansprüche

1. Lastkraftwagenchassis (10), umfassend einen Tragrahmen (11) zur Aufnahme wenigstens eines Teils des Fahrwerks, insbesondere auch wenigstens eines Teils des Fahrzeugaufbaus, wobei das fahrzeugseitig hintere Ende des Tragrahmens (11) mit einem einen Aufprallschutz für Fahrzeuge bildenden stabförmigen Element (13) versehen ist, **dadurch gekennzeichnet, daß** eine Kugelkupplungseinrichtung (14) zum lösbaren Ankuppeln von Kleinanhängern vorgesehen ist, wobei die Kugelkupplungseinrichtung (14) mit dem Tragrahmen (11) verbunden ist und wobei ein Kugelkupplungselement (140) an einem freien Ende (180) eines das Aufprallschutzelement (13) im Querschnitt teilweise umschließenden Befestigungselements (18) angeordnet ist, dessen festes anderes Ende (181) mit dem Tragrahmen (11) des Fahrzeugs verbunden ist.

2. Fahrzeugchassis nach Anspruch 1, **dadurch gekennzeichnet, daß** die Kugelkupplungseinrichtung (14) an gesonderten Verbindungselementen (15, 16) befestigt ist, über die sie mit dem Tragrahmen (11) verbunden ist.

3. Fahrzeugchassis nach Anspruch 2, **dadurch gekennzeichnet, daß** die Verbindungselemente (15, 16) zur Aufnahme eines am Fahrzeug befestigbaren Ladebordwandsystems (17) dienen.

4. Fahrzeugchassis nach einem oder mehreren der Ansprüche 1 bis 3, **dadurch gekennzeichnet, daß** die Kugelkupplungseinrichtung (14) Teil des Ladebordwandsystems (17) ist.

5. Fahrzeugchassis nach einem oder beiden der Ansprüche 3 oder 4, **dadurch gekennzeichnet, daß** der Aufprallschutz (13) Teil des Ladebordwandsystems (17) ist.

6. Fahrzeugchassis nach einem oder mehreren der Ansprüche 1 bis 5, **dadurch gekennzeichnet, daß** das Befestigungselement (18) im Querschnitt im wesentlichen U-förmig ausgebildet ist.

7. Fahrzeugchassis nach einem oder mehreren der Ansprüche 1 bis 6, **dadurch gekennzeichnet, daß** die Kugelkupplungseinrichtung (14) ein Trägerelement (141), umfassend zwei über ein Traversenelement (142) voneinander beabstandete verbundene Abstandselemente (143, 144), aufweist, wobei die Kugelkupplungseinrichtung (14) am Tra-versenelement (142) befestigt ist.

8. Fahrzeugchassis nach Anspruch 7, **dadurch gekennzeichnet, daß** das Befestigungselement (18) am Traversenelement (142) über ein am Traversenelement (142) angeordnetes Anbauelement (145) befestigbar ist.

9. Fahrzeugchassis nach Anspruch 8, **dadurch gekennzeichnet, daß** das Befestigungselement (18) mittels lösbarer Verbindungselemente mit dem Anbauelement (145) verbindbar ist.

10. Fahrzeugchassis nach einem oder mehreren der Ansprüche 7 bis 9, **dadurch gekennzeichnet, daß** die Abstandselemente (143, 144) mit dem Traversenelement (142) durch Schweißung miteinander verbunden sind.

11. Fahrzeugchassis nach einem oder mehreren der Ansprüche 8 bis 10, **dadurch gekennzeichnet, daß** das Anbauelement (145) und das Traversenelement (142) durch Schweißung miteinander verbunden sind.

## Claims

1. Lorry chassis (10), comprising a supporting frame (11) for mounting at least a part of the chassis unit, including in particular at least a part of the vehicle body, the vehicle-side rear end of the supporting frame (11) being provided with a bar-type element (13) forming a vehicle impact guard, **characterised in that** a ball coupling system (14) is provided for detachably coupling small trailers, the ball coupling system (14) being joined to the supporting frame (11) and a ball coupling element (140) being arranged on a free end (180) of a fixing element (18) which in cross section partially encloses the impact guard element (13), the fixed, other end (181) of which is joined to the supporting frame (11) of the vehicle.

2. Vehicle chassis as claimed in claim 1, **characterised in that** the ball coupling system (14) is fixed to separate connecting elements (15, 16), by which it is joined to the supporting frame (11).

3. Vehicle chassis as claimed in claim 2, **characterised in that** the connecting elements (15, 16) are used for mounting a loading tailgate system (17), which may be mounted on the vehicle.

4. Vehicle chassis as claimed in one or more of claims 1 to 3, **characterised in that** the ball coupling system (14) is part of the loading tailgate system (17).

5. Vehicle chassis as claimed in one or both of claims 3 or 4, **characterised in that** the impact guard (13) is part of the loading tailgate system (17).

6. Vehicle chassis as claimed in one or more of claims 1 to 5, **characterised in that** the fixing element (18) is substantially U-shaped in cross section.

7. Vehicle chassis as claimed in one or more of claims 1 to 6, **characterised in that** the ball coupling system (14) has a support element (141), comprising two spacing elements (143, 144) at a distance apart joined by a cross-member (142), the ball coupling system (14) being secured to the cross-member (142).

8. Vehicle chassis as claimed in claim 7, **characterised in that** the fixing element (18) may be fixed on the cross-member (142) by means of a mounting element (145) disposed on the cross-member (142).

9. Vehicle chassis as claimed in claim 8, **characterised in that** the fixing element (18) may be connected to the mounting element (145) by means of removable fixing elements.

10. Vehicle chassis as claimed in one or more of claims 7 to 9, **characterised in that** the spacing elements (143, 144) with the cross-member (142) are joined to one another by welding.

11. Vehicle chassis as claimed in one or more of claims 8 to 10, **characterised in that** the mounting element (145) and the cross-member (142) are joined to one another by welding.

## Revendications

1. Châssis de véhicule utilitaire (10) comprenant un cadre porteur (11) pour loger au moins une partie du mécanisme de roulement, en particulier également au moins une partie de la structure du véhicule, moyennant quoi l'extrémité arrière côté véhicule du cadre porteur (11) est pourvu d'un élément (13) en forme de barre formant une protection contre les chocs pour les véhicules, **caractérisé en ce qu'**un dispositif d'attache à bille (14) est prévu pour l'accouplement amovible de petites remorques, moyennant quoi le dispositif d'attache à bille (14) est relié au cadre porteur (11) et moyennant quoi un élément d'attache à bille (140) est disposé sur une extrémité libre (180) d'un élément de fixation (18) entourant partiellement en coupe transversale l'élément de protection contre les chocs (13), l'autre extrémité fixe (181) de l'élément de fixation étant reliée au cadre porteur (11) du véhicule.

2. Châssis de véhicule selon la revendication 1, **caractérisé en ce que** le dispositif d'attache à bille (14) est fixé sur des éléments de liaison séparés (15, 16) par l'intermédiaire desquels il est relié au cadre porteur (11).

3. Châssis de véhicule selon la revendication 2, **caractérisé en ce que** les éléments de liaison (15, 16) servent à loger un système de hayon élévateur (17) attachable au véhicule.

4. Châssis de véhicule selon une ou plusieurs de revendications 1 à 3, **caractérisé en ce que** le dispositif d'attache à bille (14) fait partie du système de hayon élévateur (17).

5. Châssis de véhicule selon une ou les deux revendications 3 ou 4, **caractérisé en ce que** la protection contre les chocs (13) fait partie du système de hayon élévateur (17).

6. Châssis de véhicule selon une ou plusieurs de revendications 1 à 5, **caractérisé en ce que** le dispositif de fixation (18) a une forme essentiellement en U en coupe transversale.

7. Châssis de véhicule selon une ou plusieurs de revendications 1 à 6, **caractérisé en ce que** le dispositif d'attache à bille (14) comporte un élément porteur (141) comprenant deux éléments d'écartement (143, 144) reliés avec un intervalle entre eux par un élément de traverse (142), le dispositif d'attache à bille (14) étant fixé sur l'élément de traverse (142).

8. Châssis de véhicule selon la revendication 7, **caractérisé en ce que** l'élément de fixation (18) peut être fixé sur l'élément de traverse (142) par un élément rapporté (145) disposé sur l'élément de traverse (142).

9. Châssis de véhicule selon la revendication 8, **caractérisé en ce que** l'élément de fixation (18) peut être relié à l'élément rapporté (145) à l'aide d'éléments de liaison amovibles.

10. Châssis de véhicule selon une ou plusieurs des revendications 7 à 9, **caractérisé en ce que** les éléments d'écartement (143, 144) sont reliés l'un à l'autre par soudure avec l'élément de traverse (142).

11. Châssis de véhicule selon une ou plusieurs des revendications 8 à 10, **caractérisé en ce que** l'élément rapporté (145) et l'élément de traverse (142) sont reliés l'un à l'autre par soudure.
